# EUROPEAN PATENT APPLICATION

(11) **EP 1 551 145 A1**
(43) Date of publication of application: **06.07.2005**
(21) Application number: 03300292.4
(22) Date of filing: 29.12.2003
(51) Int. Cl.: H04L 29/06

(54) **Embedded filtering policy manager using system-on-chip**

(71) Applicant: Alcatel Canada Inc., Kanata, Ontario K2K 2E6 (CA)
(72) Inventor: Marquet, Bertrand, Ottawa, Ontario K1H 1B4 (CA); d'Souza, Scott, Ottawa, Ontario K2B 7T1 (CA)
(74) Representative: Lenne, Laurence

(57) **Abstract**

A packet filter for filtering data packets in a communications network is described. The packet filter has input and output ports for receiving and transmitting respective data packets. A data filter selectively passes packets from the input port to the output port in accordance with filtering policies. A policy manager determines filtering policies and controls operation of the data filter. The policy manager is independent of its implementation and not related to any particular operating system. This independence allows for a generic path of managing policies across devices implementing a system and for more flexibility in the implementation of packet filters. Flexibility may be enhanced by implementing the policy manager in system-on-chip technology.

## Description

### FIELD OF THE INVENTION

This invention relates to security enforcement in communication networks and more particularly to systems of methods for managing and enforcing filtering policies in communication networks.

### BACKGROUND OF THE INVENTION

An essential part of any local area network (LAN) connected to the outside world is a firewall. Basically, a firewall has one simple function, to examine data and pass or reject it based on some policy information. This policy information could range from a very simple set of rules to policies that are highly complex with thousands of rules.

Conventional firewalls rely on the concepts of restricted topology and controlled entry points in carrying out the security function. Essentially, conventional firewalls act on the assumption that users on one side of the entry point i.e. the firewall, are to be trusted and that users on the other side are, at least potentially, an enemy. With an ever expanding reliance on the Internet and with shared use of private network architectures, the importance of a reliable firewall has been increased substantially. The interconnection of LANs and home-office facilities to the web, leaves users open to attacks from the outside.

One method that has been used to counteract attacks through the conventional firewall has been to extend firewall functionality to multiple nodes within the network. This distributed firewall concept makes it possible to isolate smaller groups of users and thus reduce the exposure to intruders.

There is considerable prior art relating to firewall technology and packet filtering techniques. A paper entitled "Micro-firewalls for dynamic network security with distributed intrusion detection" by Hwang and Gangadharan of the University of Southern California reports on the design experiences and research findings of a new distributed architecture for protecting exposed intranets or clusters of computers from malicious attacks. The paper presents a new approach to building firewalls, that of building micro-firewalls on network hosts to enable distributed intrusion detection with dynamic policy change, as the threat pattern changes. This distributed security is intended to counteract attacks from intruders or insiders.

A second paper entitled "Distributed Firewalls" by Wei Li of the University of Helsinki discusses the growing demands of more mobility, connectivity, availability and usability of information exchange and the shortcomings of conventional firewalls which are more and more exposed because of the original design principles. According to the paper the concept of a distributed firewall is introduced to eliminate a number of the problems that are difficult or even impossible to solve with a conventional firewall. A distributed firewall is not restricted to the topology and entry point as is a conventional firewall.

The prior art also includes United States Patents 5,968,176 and 6,330,610. U.S. Patent 5,968,176 entitled "Multilayer Firewall System" issued October 19, 1999 to Nessett et al. The '176 patent describes a system for establishing security in a network that includes nodes having security functions operating in multiple protocol layers. Multiple network devices such as remote access equipment routers which are repeaters and network cards having security functions, are configured to contribute to implementation of distributed firewall functions in the network. By distributing firewall functionality throughout many layers of the network in a variety of network devices, a pervasive firewall is implemented. The pervasive, multilayer firewall includes a policy definition component that accepts policy data that defines how the firewall should behave. The policy definition component can be a centralized component, or a component that is distributed over the network. The multilayer firewall also includes a collection of network devices that are used to enforce the defined policy. The security functions operating in this collection of network devices across multiple protocol layers are co-ordinated by the policy definition component so that particular devices enforce that part of the policy pertinent to their part of the network.

According to the '176 patent a distributed firewall system having a policy definition component, which can be either distributed or centralized, and a policy enforcement component that is distributed among network devices and which operates at different protocol layers in the network is contemplated. The policy enforcement component includes a front-end process, which receives security policy statements, and a back-end process, which formats the statements into configuration data enforceable at network nodes. The configuration data can take the form of static data, e.g. filtering rules, or dynamic data e.g. JAVA programs.

A second United States patent entitled "Multi-Stage Data Filtering System Employing Multiple Filtering Criteria" issued under Patent Number 6,330,610 to Doctor et al. on December 11, 2001. This patent describes a filtering system that filters data in multiple stages. The system provides a first filter criteria to a first device. The first device uses the first filter criteria to generate a first set of filtered data. The system receives the first set of filtered data from the first device and filters the received data based on a second filter criteria, which is different from the first filter criteria. The filtering of the first set of filtered data generates a second set of filtered data. The first filter criteria and the second filter criteria can be included in a profile data set. The profile data set may be associated with a particular data recipient. The first filter criteria contains public profile data and the second filter criteria contains private profile data. The profile data set may contain data elements associated with a particular class of data recipients or a particular data recipient role. The data filtering system can be implemented such that the first device is an untrusted filtering device and the second device is a trusted filtering device.

The '610 patent discloses a client-server based data filtering system in which both the client and the server include respective filter criteria and a filter for filtering incoming data.

As it relates to the present invention the above noted patents do not relate to the feature of dynamic connection tracking, nor do they disclose the feature of parallel policy processing, wherein another policy manager requests a policy change to indicate a new global policy.

In summary the prior art relating to micro -firewalls and distributed software firewalls disclose policy managers that remain dependent on the underlying platform of which they are executed.

### SUMMARY OF THE INVENTION

The present invention relates to an approach for policy management within stand alone or distributed packet filters.

The present invention provides a policy manager that is independent of its implementation and not related to any particular operating system. This independence allows for a generic path of managing policies across devices implementing a system and for more flexibility in the implementation of packet filters.

The invention also relates to an embedded filtering policy manager which may be implemented in a system-on-chip technology thus enhancing the implementation flexibility.

Therefore, in accordance with a first aspect of the present invention there is provided a packet filter for filtering data packets in a communications network, comprising: an input port for receiving data packets; an output port for transmitting filtered data packets; a data filter coupled between the input and output ports, and being operable to selectively pass data packets from the input port to the output port in accordance with packet filtering policies; and a policy manager coupled to the data filter and input port, and having an interface adapted for exchanging policy information with other policy managers and having means for determining the packet filtering policies, the policy manager being operable to control operation of the data filter by effecting changes to the packet filtering policies.

### BRIEF DESCRIPTION OF THE DRAWINGS

The invention will now be described in greater detail with reference to the attached drawings wherein:

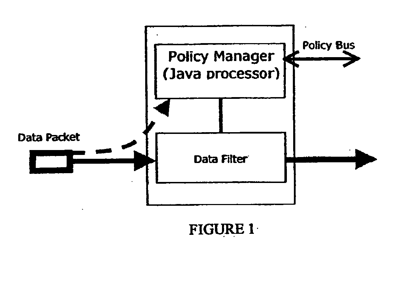

Figure 1 is a block diagram of the system architecture; and
Figure 2 is an example of uses of the system on chip filter according to the present invention.

### DETAILED DESCRIPTION OF THE INVENTION

The present invention provides a system which effectively splits a packet filter into two components: the policy manager and the data filter. The policy manager is implemented using a programming language that can run in many different systems. A component such as Java Virtual Machine (JVM) provides this function. A JVM within a hardware Java processor, for example, serves as the policy manager. The data filter may be built using either gate level FPGA or ASIC technology. If a hardware Java processor is to be used, the implementation can advantageously be a System-On-Chip format, with both the policy manager and the data filter integrated into the same FPGA or ASIC. In any event the policy manager controls the filtering algorithms and their parameters and the data filter implements the protocol level analysis of data packets.

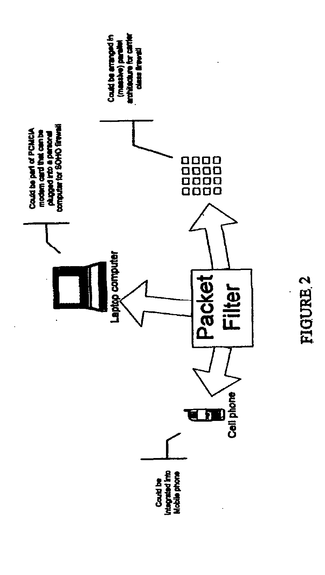

The integrated packet filter utilizing a JVM in a system-on-chip format can be implemented in a range of applications. As shown in Figure 2 a system-on-chip filter according to the invention can be arranged in a parallel architecture for a carrier class firewall. The system-on-chip filter can also be implemented in a mobile telephone or part of a Personal Computer Memory Card (PCMCIA) modem that can be plugged into a personal computer or Small Office/Home Office (SOHO) firewall. Policy filters of the type disclosed herein can be used in a variety of architectures and in particular a wide range of telecommunication applications.

The packet filter, according to the present invention allows for policy modification in several different ways. For example, a packet entering the data filter might cause a local update of the policy within the policy manager. This is known herein as dynamic connection tracking. In a parallel-processing situation, another policy manager located elsewhere in the network may request a policy change to indicate new global policy.

It is also within the scope of the invention for an external policy manger network management system to request a policy change to implement administrative changes to policy.

The main advantage of this invention is the wide range of applications that can implement filtering features. Since Java is used as the embedded Operating Software (OS), the portability of applications is guaranteed from implementation to implementation. Also, the policy manager can detect the type of data filter attached and obtain the corresponding policy application for that protocol.

Since the aforementioned features of the present invention rely on a Java Virtual Machine they will find particular application in new architectures.

While particular embodiments of the invention have been described and illustrated it will be apparent to one skilled in the art that numerous changes can be made to the basic concept. It is to be understood, however, that such changes will fall within the full scope of the invention as defined in the appended claims.

## Claims

1. A packet filter for filtering data packets in a communications network, comprising:
an input port for receiving data packets;
an output port for transmitting filtered data packets;
a data filter coupled between the input and output ports, and being operable to selectively pass data packets from the input port to the output port in accordance with packet filtering policies; and
a policy manager coupled to the data filter and input port, and having an interface adapted for exchanging policy information with other policy managers and having means for determining the packet filtering policies, the policy manager being operable to control operation of the data filter by effecting changes to the packet filtering policies.

2. The packet filter as defined in claim 1 wherein the means for determining the packet filtering policies are filtering algorithms and associate parameters.

3. The packet filter as defined in claim 2 wherein the policy manager is further operable to effect a change to a packet filtering policy in response to a particular data packet entering the data filter.

4. The packet filter as defined in claim 3 wherein the policy manager is further operable to send a request for a policy change to other policy managers in the communications network, thereby effecting a global policy change in the communications network.

5. The packet filter as defined in claim 4 wherein the policy manager is in the form of a Java virtual machine within a hardware Java processor.

6. The packet filter as defined in claim 1 wherein said policy manager is implemented in a universal programming language.

7. The packet filter as defined in claim 6 wherein said data filter and said policy manager are fabricated using a field programmable gate array (FPGA).

8. The packet filter as defined in claim 6 wherein said data filter and said policy manager are fabricated using ASIC technology.

9. The packet filter as defined in claim 6 wherein said data filter and said policy manager are fabricated in a system-on-chip format.
